# EUROPÄISCHE PATENTSCHRIFT

(11) **EP 1 061 008 B1**
(45) Veröffentlichungstag und Bekanntmachung des Hinweises auf die Patenterteilung: **14.04.2004**
(21) Anmeldenummer: 00111395.0
(22) Anmeldetag: 26.05.2000
(51) Int. Cl.: B65D 85/68, B60J 11/00

(54) **Schutzumhüllung für ein Kraftfahrzeug**
Protective covering for a motor vehicle
Enveloppe de protection pour un véhicule automobile

(30) Priorität: 07.06.1999 DE 29909890 U; 03.03.2000 DE 20004071 U
(43) Veröffentlichungstag der Anmeldung: 20.12.2000
(73) Patentinhaber: Hermann Chr. Knüppel KG, 34346 Hann. Münden (DE)
(72) Erfinder: Rabasse, Kenneth, D-34414 Warburg (DE); Pilz, Hendrik, D-37073 Göttingen (DE)
(74) Vertreter: Hertz, Oliver, Dr.

(56) Entgegenhaltungen:
- DE-C- 861 512
- DE-U- 29 907 857
- FR-A- 2 706 374
- US-A- 2 243 981
- US-A- 5 244 245
- US-A- 5 845 958

## Beschreibung

Die Erfindung betrifft eine Schutzumhüllung für oberflächenempfindliche Bauteile, insbesondere eine Umhüllung für Bauteile mit lackierten oder polierten Oberflächen zu deren Schutz beim Transport bzw. bei der Lagerung, wie z. B. eine Umhüllung für Kraftfahrzeuge zum Transport- und Lagerschutz vor deren Auslieferung an den Kunden.

Es ist allgemein bekannt, Bauteile, z. B. für technische Anlagen, nach ihrer Herstellung bis zum bestimmungsgemäßen Einbau in der jeweiligen Anlage durch eine Verpackung gegen nachteilige mechanische oder chemische Umwelteinflüsse zu schützen. Derartige Verpackungen bestehen aus einem starren Verpackungsmaterial, z. B. in Kastenform, oder auch aus einem flexiblen Verpackungsmaterial auf der Basis von Papier oder Folie. Der Nachteil herkömmlicher Kastenverpackungen besteht in deren hohem Material- und Platzbedarf. Die verfügbaren flexiblen Verpackungen besitzen je nach Bauform verschiedene Nachteile. Einfache Umhüllungen, in die das Bauteil jeweils eingeschlagen wird, erfordern den Einsatz zusätzlicher loser Befestigungselemente, z. B. in Form von Schnüren oder Klebestreifen. Dadurch wird der Verpackungsvorgang aufwendig. Außerdem ergibt sich in der Regel eine verminderte Zuverlässigkeit bei der Erfüllung der Schutzfunktion. Ein generelles Problem bei Schutzumhüllungen aus glatten Folienbahnen ist die gewünschte Anpassung an die Raumform des zu verpackenden Bauteils, die ggf. völlig unregelmäßig ist. Andererseits sind Schutzumhüllungen in Gestalt verschließbarer Säcke bekannt, die zwar an die Raumform des Bauteils gut angepaßt sind und eine erhöhte Zuverlässigkeit besitzen, jedoch aufwendig und teuer herzustellen sind.

Die genannten Probleme treten besonders bei großformatigen Bauteilen, wie z. B. Kraftfahrzeugen, auf. Neben den genannten Bedürfnissen nach einem geringen Material- und Platzbedarf der Verpackung und einem einfachen Verpackungsvorgang bestehen zusätzliche Anforderungen hinsichtlich der Handhabung großformatiger Bauteile bei deren Transport. Es ist bspw. bekannt, beim Transport von Kraftfahrzeugen zum Karosserieschutz Wachsschichten aufzubringen. Diese besitzen zwar den Vorteil, dass die Manövrierfähigkeit des Kraftfahrzeugs auch bei der Auslieferung von Hersteller zum Händler voll erhalten bleibt. Dafür ist jedoch die Beseitigung des Schutzes (Abwaschen der Wachsschicht) sehr zeit- und lösungsmittelaufwendig. Es ist ferner bekannt, Schutzumhüllungen für Kraftfahrzeuge durch thermisch aufgeschrumpfte Folien zu bilden. Diese sind wegen des arbeits- und energieaufwendigen Verpackungsvorgang nachteilig. Außerdem muss zur Bewegung des Kraftfahrzeugs während der Auslieferung aus eigener Kraft die Schutzumhüllung zumindest teilweise zerstört werden (Öffnen einer Tür). Dies bedeutet eine irreversible Einschränkung der Funktionsfähigkeit der Schrumpffolie.

Aus US-A-5 927 793 ist eine Schutzabdeckung für Kraftfahrzeuge, Flugzeugteile oder Bootsteile bekannt, die eine Plane zur Abdeckung des jeweiligen Körpers und am Rand der Plane einen umlaufenden, elastischen Rahmen umfaßt, der der Fixierung der Plane beispielsweise an einem Kraftfahrzeug dient. Diese Schutzumhüllung besitzt mehrere Nachteile. Erstens ist die Plane an die Form des abzudeckenden Körpers angepaßt. Dies bedeutet einen hohen Materialaufwand und Probleme beim Freilufttansport. Die Plane bildet einen hohen Luftwiderstand. Außerdem besitzt die Schutzumhüllung mit dem umlaufenden Rahmen einen komplizierten Aufbau. Um den Rahmen zuverlässig fixieren zu können, enthält er ein kompliziertes Gestänge, das einen großen Montageaufwand erfordert.

Aus DE-OS 197 24 345 ist eine Schutzhaube für Fahrzeuge bekannt. Die Schutzhaube besteht aus einer stabilen, selbsttragenden Kapsel, die die Fahrzeugoberfläche passgenau abdeckt. Die Kapsel kann beispielsweise aus stabilem Polyurethanschaum bestehen. Die Schutzhaube besitzt den Nachteil einer starren Form. Würde sie als Transportverpackung verwendet werden, so müßte die Schutzhaube am Zielort vernichtet oder mit großem Aufwand zurückgeschickt werden. Ein weiterer Nachteil der Schutzhaube ist durch den großen Aufwand zu deren Herstellung gegeben.

Zum Schutz von Kraftfahrzeugen sind auch Faltgaragen bekannt (z.B. US 2 243 981, DE 861 512, US 5 244 245, US 5 845 958), die sich jedoch nicht als Transportschutz für Fahrzeuge bei der Auslieferung eignen. Einfache Bauformen herkömmlicher Faltgaragen bilden nämlich nur eine kastenförmige, grob an die äußere Gestalt des Kraftfahrzeugs angepasste, flexible Umhüllung, die nur locker auf der Karosserie aufsitzt. Beim Transport mit der Bahn oder einem Lkw würde eine solche Faltgarage mindestens einen unannehmbar großen Windwiderstand erzeugen oder sogar weggeblasen werden. Kompliziertere Bauformen von Faltgaragen zeichnen sich durch zusätzliche mechanische Komponenten (Faltantriebe und dgl.) aus, die eine Anwendung für den Transportschutz ausschließen.

Die Aufgabe der Erfindung ist es, eine verbesserte Schutzumhüllung insbesondere für Kraftfahrzeuge anzugeben, die einfach anwendbar ist und sich durch eine hohe Zuverlässigkeit auszeichnet. Die Schutzumhüllung soll ferner ohne Einschränkung der Schutzfunktion die Bedienbarkeit des Kraftfahrzeuges im verpackten Zustand ermöglichen. Es besteht insbesondere ein Interesse daran, dass die verbesserte Schutzumhüllung auch beim Freilufttransport bei hohen Geschwindigkeiten einen festen und zuverlässigen Verbund mit den verpackten Kraftfahrzeug bildet.

Diese Aufgabe wird durch eine Schutzumhüllung mit den Merkmalen gemäß Anspruch 1 gelöst. Vorteilhafte Ausführungsformen der erfindungsgemäßen Schutzumhüllung ergeben sich aus den abhängigen Ansprüchen.

Die Erfindung basiert auf der Idee, eine aus einer Vielzahl von flexiblen Foliensegmenten bestehende Schutzumhüllung für ein Kraftfahrzeug bereitzustellen, deren räumliche Form der Form der Karosserieoberfläche des Kraftfahrzeugs entspricht. Die Foliensegmente sind so zusammengesetzt, dass die Schutzumhüllung im entspannten Zustand fest anliegend oder mit einem geringen Spielraum auf der Karosserie aufsitzt. Die Erfinder haben überraschenderweise festgestellt, dass eine Schutzumhüllung mit Karosseriepassung, die aus den Foliensegmenten zu einer einstückigen Hülle zusammengesetzt ist, problemlos ohne Überdehnungen oder Zerstörungen der Hülle auf die Karosserie aufgezogen und wieder abgenommen werden kann.

Ein wichtiger Aspekt der Erfindung besteht insbesondere in der Schaffung der Schutzumhüllung in Gestalt einer an die Form des zu umhüllenden Kraftfahrzeugs angepaßten Tasche, die dazu ausgebildet ist, das Kraftfahrzeug zumindest teilweise aufzunehmen, und einen Umschlag aufweist, der zur Abdeckung des übrigen Kraftfahrzeugs ausgebildet ist. Die Tasche umfasst Abdecksegmente, die zu einer Form entsprechend dem Frontbereich des Kraftfahrzeuges zusammengesetzt sind. Der Umschlag umfasst Abedecksegmente für alle restlichen Karosserieteile.

Die Foliensegmente sind an ihren Rändern entlang vorbestimmter Kantenlängen miteinander verbunden, wobei die verbundenen Ränder verschieden geformte Begrenzungen des jeweiligen Foliensegments bilden. Ein besonderes Merkmal der Erfindung besteht somit darin, daß zur Ausbildung einer bestimmten Raumform der Schutzumhüllung die Segmente zwar entlang gleicher oder einander überlappender Schnittkantenlängen miteinander verbunden sind. Die aneinandergrenzenden Ränder mit den gleichen Schnittkantenlängen besitzen jedoch nicht dieselbe Form, so daß in verbundenem (z. B. zusammengenähtem, geschweißtem oder verklebtem) Zustand kein glatter Faltungsbereich, sondern formabhängig ein gewölbter Bereich entsteht, der an die Gestalt des zu verpackenden Karosserieteils angepaßt ist. Damit wird es möglich, mit einem an sich flachen, bahnförmigen Folienmaterial eine gewölbte Umhüllung für einen dreidimensionalen Körper auszubilden. Bei Betrachtung einer ebenen Aufspannung der Foliensegmente wird beispielsweise ein in der jeweiligen Folienebene gerader Rand mit einem gekrümmten Rand verbunden. Je nach konkaver oder konvexer Krümmung (hin zum bzw. weg vom zugehörigen geraden Rand) ergibt sich somit im verbundenen Zustand der Segmente eine Außen- oder Innenwölbung. Diese Krümmung wird anwendungsabhängig je nach dem zu bedeckenden Karosserieteil gewählt.

Die erfindungsgemäße Schutzumhüllung bildet allgemein eine Transport- oder Lagerverpackung für Bauteile mit lackierten oder polierten Oberflächen, insbesondere für Kraftfahrzeuge, die vom Fahrzeughersteller zum Händler transportiert werden.

Gemäß einer bevorzugten Ausführungsform enthält die Schutzumhüllung Klappsegmente, die entlang einer Schnittlinie mit der Schutzumhüllung fest verbunden und entlang mindestens einer weiteren Schnittlinie mit der Schutzumhüllung über lösbare Verschluss- und Befestigungselemente verbunden sind. Klappsegmente sind bspw. zur Abdeckung der Haube des Motorraums oder der Fahrertür vorgesehen. Die Schutzumhüllung kann im verpackten Zustand teilweise geöffnet werden, bspw. um das Fahrzeug zeitweilig in einen fahrbereiten Zustand zu versetzen oder um mit dem Fahrzeug aus eigener Kraft zu manövrieren.

Gemäß einem weiteren wichtigen Gesichtspunkt der Erfindung enthält die Schutzumhüllung mindestens ein Sichtsegment im Bereich der Frontscheibe. Mit dem Sichtsegment wird die Manövrierfähigkeit des Fahrzeugs im verpackten Zustand verbessert.

Die Erfindung liefert die folgenden Vorteile. Die Schutzumhüllung verbindet die Vorteile einer einfachen Herstellung und Anpassung an konkrete Verpackungsaufgaben mit einer hohen Zuverlässigkeit und Beständigkeit der Umhüllung unter realen Betriebsumständen. Die Schutzumhüllung erlaubt eine einfache Anpassung an die Raumform des zu umhüllenden Bauteils. Sie ist gut für Abdeckung typspezifischer, unregelmäßiger, in beliebigen Raumrichtungen vorgesehener Karosserieformen geeignet. Die Schutzumhüllung ist besonders auf den Schutz der empfindlichen Bauteiloberflächen gerichtet und erlaubt es, daß weniger empfindliche Komponenten nur teilweise abgedeckt sind oder sogar aus der Schutzumhüllung herausragen (z. B. die Räder).

Die erfindungsgemäße Schutzumhüllung kann mit einer einzelnen Person oder auch automatisiert in einem einfachen Arbeitsschritt auf das Fahrzeug aufgezogen werden. Die Abnahme erfolgt zerstörungsfrei. Die Schutzumhüllung ist mehrfach verwendbar. Versuche im Strömungskanal haben gezeigt, dass die Schutzumhüllung auch in starken Luftströmungen (z. B. Fahrtwind beim Bahntransport) stabil auf der Karosserie aufsitzt, ohne sich aufzublähen oder abgerissen zu werden. Die Befestigung der Schutzumhüllung erfolgt mit einfachen Verschluss- und Befestigungselementen, die lediglich den Sitz der Schutzumhüllung auf der Karosserie sicherstellen, ohne größere Kräfte aufnehmen zu müssen. Zusätzliche Transportsicherungen sind nicht erforderlich.

Die Schutzumhüllung kann vollständig aus wiederverwertbarem Material hergestellt werden. Wenn die Schutzumhüllung nach Mehrfachnutzung aus dem Verkehr gezogen wird, kann sie vollständig recycelt werden und insbesondere zur Herstellung einer neuwertigen Schutzumhüllung verwendet werden.

Es wird mit der erfindungsgemäßen Schutzumhüllung erstmalig ein Verfahren insbesondere zum Schutz von Kraftfahrzeugen bereitgestellt, bei dem die Schutzumhüllung am Herstellungsort des Kraftfahrzeugs oder der Karosserie oder in einer Werkstatt auf das Kraftfahrzeug bzw. die Karosserie aufgezogen und der umhüllte Körper zu einem Zielort transportiert wird.

Weitere Vorteile und Einzelheiten der Erfindung werden im folgenden unter Bezug auf die beigefügten Zeichnungen beschrieben.
Es zeigen:
- Fig. 1: eine Perspektivansicht eines mit einer erfindungsgemäßen Schutzumhüllung verpackten Fahrzeugs,
- Fig. 2: eine Perspektivansicht einer Schutzumhüllung mit geöffneten Klappsegmenten,
- Fig. 3: eine Übersichtsdarstellung von Foliensegmenten zur Bedeckung einer Karosserieseite,
- Fig. 4: eine Übersichtsdarstellung von Foliensegmenten zur Bedeckung des vorderen Fahrzeugteils,
- Fig. 5: eine Übersichtsdarstellung von Foliensegmenten zur Bedeckung des hinteren Fahrzeugteils,
- Fig. 6: eine Illustration von Klapp- und Sichtsegmenten einer erfindungsgemäßen Schutzumhüllung,
- Fig. 7: eine Übersichtsdarstellung von Foliensegmenten zur Bedeckung der oberen Karosserieteile,
- Fig. 8: eine Illustration eines Sichtsegments,
- Fig. 9: Illustrationen von Foliensegmenten zur Abdeckung von Außenspiegeln, und
- Fig. 10: eine Schnittdarstellung eines Folienmaterials zur Herstellung der Foliensegmente.

Im folgenden wird die Erfindung am Beispiel einer als Transporthaube für ein Kraftfahrzeug ausgebildeten Schutzumhüllung erläutert. Die Erfindung ist jedoch nicht auf die Umhüllung von Kraftfahrzeugen beschränkt, sondern in analoger Weise für beliebige Bauteile, wie z. B. Teile von Kraftfahrzeugen, Flugzeuge oder Schiffe oder Teile von diesen, realisierbar.

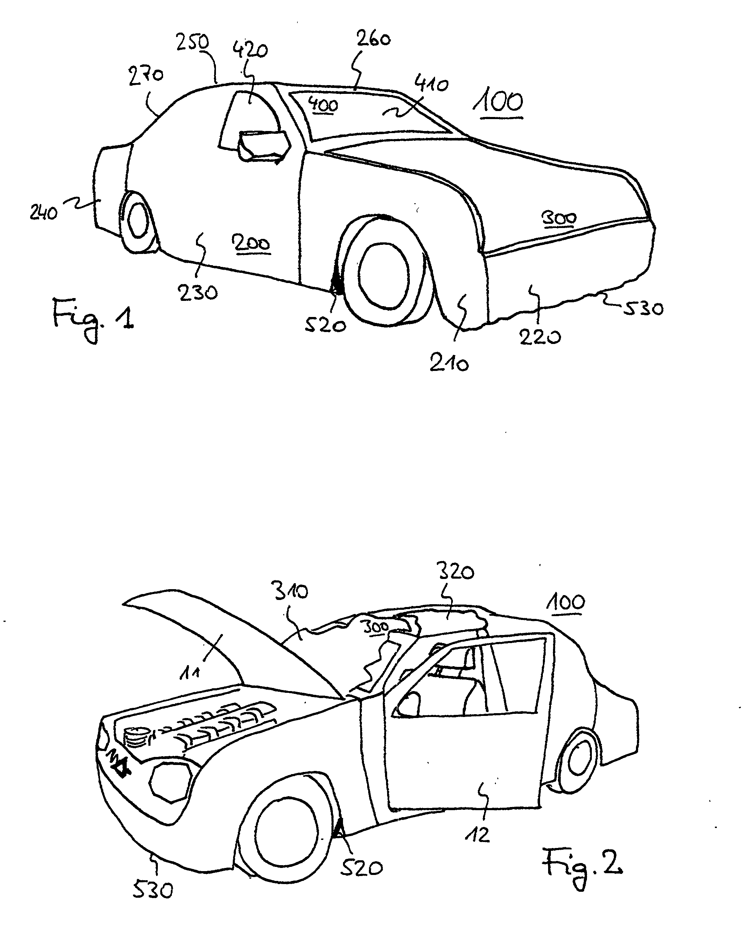

Die Figuren 1 und 2 illustrieren ein mit der erfindungsgemäßen Schutzumhüllung 100 verpacktes Kraftfahrzeug in schematischer Perspektivansicht, wobei aus Übersichtlichkeitsgründen die einzelnen Foliensegmente (insgesamt rd. 30) und deren gegenseitige Verbindung entlang von Segmenträndern mit verschiedenen Formen nicht gezeigt sind. Das Prinzip der Segmentverbindung zur Erzielung bestimmter Raumformen der Umhüllung wird unten erläutert. Die Schutzumhüllung 100 umfasst Abdecksegmente 200 zur Abdeckung bestimmter Karosserieteile oder der Spiegel, Klappsegmente 300, die ein zeitweiliges Öffnen der Schutzumhüllung im verpackten Zustand des Kraftfahrzeugs ermöglichen, und Sichtsegmente 400, die der Schaffung von Sichtfenstern in der Schutzumhüllung dienen. Die Klapp- und Sichtsegmente sind fakultative Merkmale einer erfindungsgemäßen Schutzumhüllung. Die o. g. Aufgabe wird auch durch eine ausschließlich aus fest miteinander verbundenen Abdecksegmenten gebildete Schutzumhüllung gelöst.

Von den Abdecksegmenten 200, deren Einzelheiten unten erläutert werden, sind die vorderen Kotflügelsegmente 210 und das Frontsegment 220 hervorzuheben. Diese Segmente bilden eine Tasche, in die beim Auflegen der Schutzumhüllung zunächst die vorderen Karosserieteile eingeführt werden. Die übrigen Abdecksegmente, insbesondere die Seitensegmente 230 und die hinteren Kotflügelsegmente 240 bilden mit dem Dachsegment 250 und den Frontscheiben- und Rückscheibensegmenten 260, 270 einen Umschlag. Dieser Umschlag wird nach Anbringung der Segmente 210 und 220 über die restliche Karosserie umgeschlagen oder gezogen, um die Umhüllung zu vervollständigen.

Die Klappsegmente 300 sind Foliensegmente, deren Verbindung mit benachbarten Foliensegementen entlang mindestens einer Schnittlinie trennbar und auch verschließbar ist. Sie umfassen insbesondere das Motorhaubensegment 310 und das Fahrertürsegment 320. Figur 2 illustriert den besonderen Vorteil dieser Segmente, die jeweils entlang einer Schnittlinie mit der übrigen Schutzumhüllung fest verbunden sind. Die Segmente 310, 320 können nach Öffnen der jeweiligen Verschluss- und Befestigungselemente zur Verbindung mit benachbarten Foliensegmenten nach oben weggeschlagen werden, so dass sich die Motorhaube 11 bzw. die Fahrertür 12 öffnen lassen. Die Verschluss- und Befestigungselemente umfassen bspw. Reißverschlüsse, Klettverschlüsse, Druckknopfleisten oder ähnlich reversibel lösbare Verbindungen. Anwendungsabhängig können weitere Klappsegmente, bspw. am Kofferraum oder am Tankstutzen, vorgesehen sein.

Als Sichtelemente 400 sind das Frontsichtsegment 410 und das Seitensichtsegment 420 vorgesehen. Zumindest die Sichtelemente 400 der erfindungsgemäßen Schutzumhüllung bestehen aus einem durchsichtigen Material, z. B. aus PVC, Zellglas oder einem gelochten Folienmaterial (Gittergewebe oder Lochstanzfolie). Weitere Sichtsegmente könnten bspw. am Rückfenstersegment 270 oder an der Position der Scheinwerfer vorgesehen sein.

An der erfindungsgemäßen Schutzumhüllung 100 sind auch Verschluss- und Befestigungselemente vorgesehen, die neben den Verbindungen für die Klappsegmenten 300 auch Befestigungslaschen 520 und Gummizüge 530 umfassen.

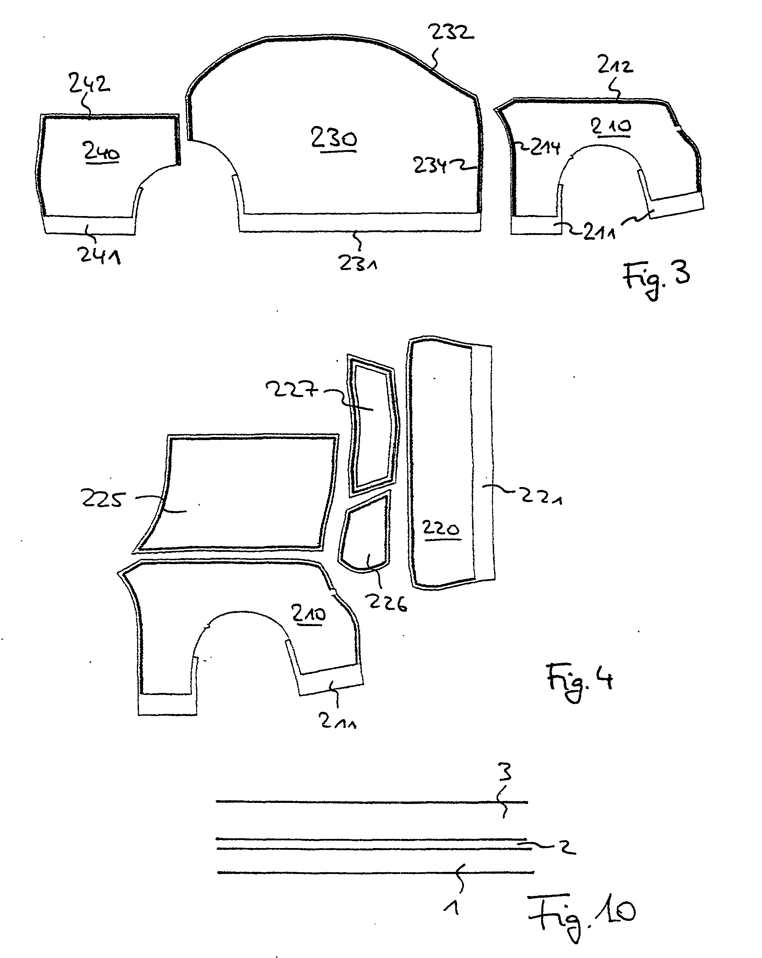

Figur 3 illustriert Einzelheiten der vorderen und hinteren Kotflügelsegmente 210, 240 und des Seitensegments 230 in auseinandergezogener Darstellung. Die äußere Gestalt der Segmente folgt im Wesentlichen der Form der abzudeckenden Seitenflächen der Fahrzeugkarosserie. An den Unterkanten der Segmente, die die untere Begrenzung der Schutzumhüllung bilden, sind Verstärkungssegmente 211, 231 und 241 vorgesehen. In der vollständig zusammengesetzten, einsatzbereiten Schutzumhüllung sind die Verstärkungssegmente nach innen umgeschlagen und mit den jeweils angrenzenden Segmenten vernäht oder verschweißt. An den in Druck hervorgehobenen Rändern 212, 232 bzw. 242 der Segmente sind besonders verstärkte Verbindungen (z. B. Doppelnähte) mit den jeweils benachbarten Foliensegmenten vorgesehen.

In Figur 3 ist am Beispiel der einander gegenüberliegenden Schnittkanten der Segmente 210, 230 ein wichtiges Merkmal der erfindungsgemäßen Verbindung von Foliensegmenten erkennbar. Die Schnittkante 214 des vorderen Kotflügelsegments 210 besitzt eine andere Form als die im zusammengesetzten Zustand angrenzende Schnittkante 234 des Seitensegments 230. Die Schnittkante 214 ist stärker gekrümmt als die Schnittkante 234. Dies bedeutet, dass im zusammengesetzten Zustand die Segmente 210, 230, obwohl sie jeweils aus ebenen Folienmaterialen ausgeschnitten sind, eine Raumform aufspannen, die an die äußere Karosserieform im Bereich des Übergangs von einer Seitentür zum vorderen Kotflügel angepasst ist. Dieses Prinzip der Verbindung gleicher Kanten- oder Schnittlängen mit verschiedenen Formen zur Erzielung einer bestimmten Raumform der Umhüllung wird je nach Bedarf auch an anderen Schnittkanten verwendet.

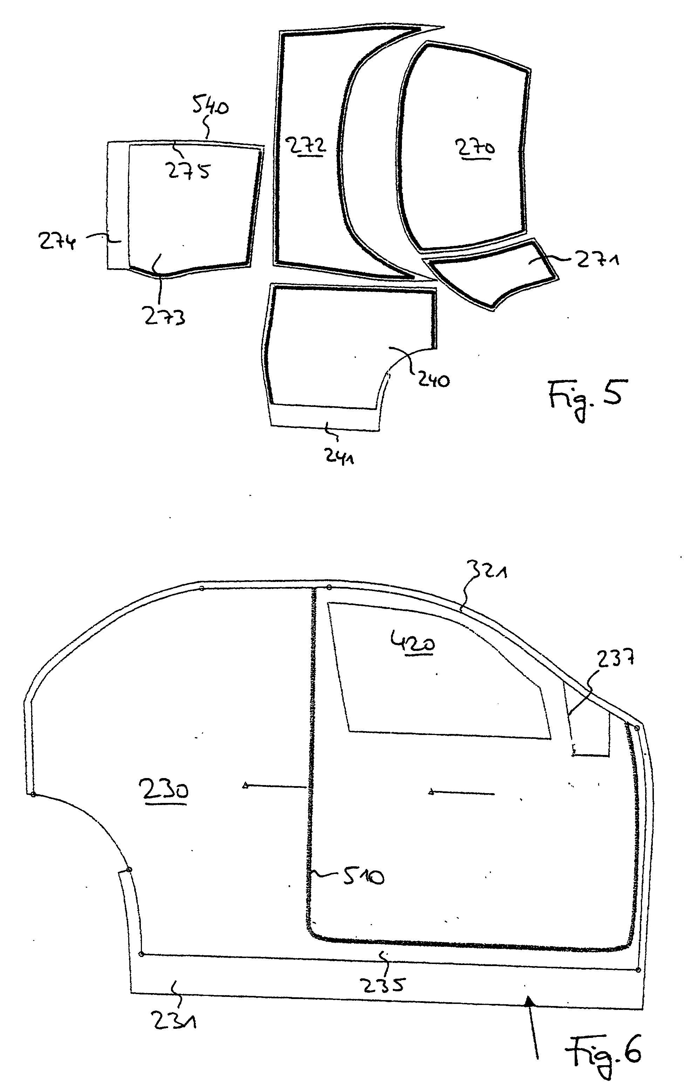

Figur 4 illustriert die Foliensegmente zur Abdeckung des vorderen Teils des Fahrzeugs. Zu diesen zählt neben dem vorderen Kotflügelsegment 210 (siehe auch Figur 3) und dem Frontsegment 220 (siehe auch Figur 1) ein erstes Motorhaubensegment 225, ein Scheinwerfersegment 226 und ein Grillsegment 227. Zur Vervollständigung der Abdeckung des vorderen Teils sind ein weiteres Motorhaubensegment, ein weiteres Scheinwerfersegment und entsprechend das gegenüberliegende Kotflügelsegment (jeweils nicht dargestellt) vorgesehen. Diese Segmente sind in Bezug auf die Fahrzeuglängsachse spiegelbildlich zu den entsprechenden Segmenten 210, 225 und 226 gebildet. Figur 4 illustriert wiederum die Verstärkungssegmente 211 bzw. 221. Im umgeklappten Verstärkungssegment 221 ist ein Gummizug zur Befestigung des Segments an der Karosserieunterseite vorgesehen. Gemäß bevorzugter Ausführungsformen der Erfindung befindet sich der Gummizug auch in den übrigen Verstärkungssegmenten, die bspw. in den Figuren 3 und 6 illustriert sind.

In Figur 4 sind die Foliensegmente relativ so zueinander angeordnet, wie sie in der Schutzumhüllung zusammengesetzt werden. Wiederum ist das Prinzip der verschieden gekrümmten Schnittkanten zur Erzielung vorbestimmter Raumformen erkennbar. Bspw. liefert die winklige Krümmung des Grillsegments 227 relativ zur benachbarten graden Schnittkante des Frontsegments 220 eine an die Karosserieform angepasste Krümmung der Schutzumhüllung. Das Grillsegment kann mit Luftlöchern oder -schlitzen versehen sein oder aus Gaze bestehen.

Figur 5 illustriert entsprechend die Form und relative Anordnung der Foliensegmente am hinteren Teil des Kraftfahrzeugs. Die Segmente umfassen im Einzelnen das hintere Kotflügelsegment 240 mit dem Verstärkungssegment 241 (siehe auch Figur 3), das Rückfenstersegment 270, ein erstes Holmsegment 271, ein Heckklappensegment 272 und ein erstes Stoßstangensegment 273. Ein zweites Holmsegment und ein zweites Stoßstangensegment sind spiegelsymmetrisch auf der gegenüberliegenden Seite der Umhüllung zur Abdeckung der entgegengesetzten Karosserieseite vorgesehen. Das Stoßstangensegment 273 besitzt ebenfalls ein Verstärkungssegment 274 zur Führung eines Gummizugs.

Das Stoßstangensegment 273 ist entlang seiner Schnittkante 275 mit den benachbarten Stoßstangensegment (nicht dargestellt) verbunden. Gemäß einer bevorzugten Ausführungsform der Erfindung ist diese Verbindung reversibel lösbar ausgebildet. Über die Länge der Schnittkante 275 erstreckt sich ein reversibler Verschluß (z.B. Klett- oder Reißverschluss) 540. Dieser Aufbau besitzt den Vorteil, dass bei geöffnetem Verschluss 540 ein Zugriff zum Kofferraum möglich ist. Außerdem kann das Aufziehen der Schutzumhüllung auf das Kraftfahrzeug typabhängig bei geöffnetem Klettverschluss 540 erleichtert werden.

In Figur 6 sind typische Klapp- und Sichtsegmente beispielhaft an einem Seitensegment 230 illustriert. In der Praxis ist jedoch typischerweise als Klappsegment das Fahrertürsegment 320 an der linken Vordertür und das Fenstersegment 420 an der rechten Vordertür vorgesehen.

Das Fahrertürsegment 320 ist entlang seiner Oberkante 321 mit dem Seitensegment 230 fest vernäht. An den übrigen Seiten wird die Verbindung durch einen Reißverschluss 510 gebildet. Das Fahrertürsegment 320 wird von Teilen des Seitensegments 230 allseits wie durch einen Rahmen umgeben. Insbesondere an der Unterseite verlängert sich das Seitensegment 230 entlang der unteren Kante als Segmentstreifen 235. An diesem befindet sich wiederum das umschlagbare Verstärkungssegment 231 zur Aufnahme des Gummizugs. Das Fenstersegment 420 ist in anwendungsabhängig gewählter Form aus einem der o. g. Materialien in das Seitensegment 230 eingesetzt. Das Bezugszeichen 237 verweist auf die Annählinie für Spiegelteile, die im Einzelnen unten unter Bezug auf Figur 9 illustriert sind.

Die Foliensegmente zur Abdeckung des Dachbereiches eines Fahrzeugs sind in Figur 7 gezeigt. Es ist ein Dachsegment 250 vorgesehen, an dessen Vorderseite das Frontscheibensegment 260 und dazu entgegengesetzt das Rückfenstersegment 270 angebracht sind. Es sind ferner das hintere Holmsegment 271 (siehe auch Figur 5) und ein vorderes Holmsegment 261, sowie Verbindungssegmente 251, 252 zur Verbindung zwischen dem Dachsegment 250 und dem jeweiligen Seitensegment (nicht dargestellt) vorgesehen. Figur 7 illustriert wiederum die Bildung gekrümmter Raumformen durch Verbindung von Schnittkanten verschiedener Gestalt. Im Frontscheibensegment 260 oder anstelle des Frontscheibensegments 260 kann ein Sichtsegment 410 (siehe Figur 1) vorgesehen sein.

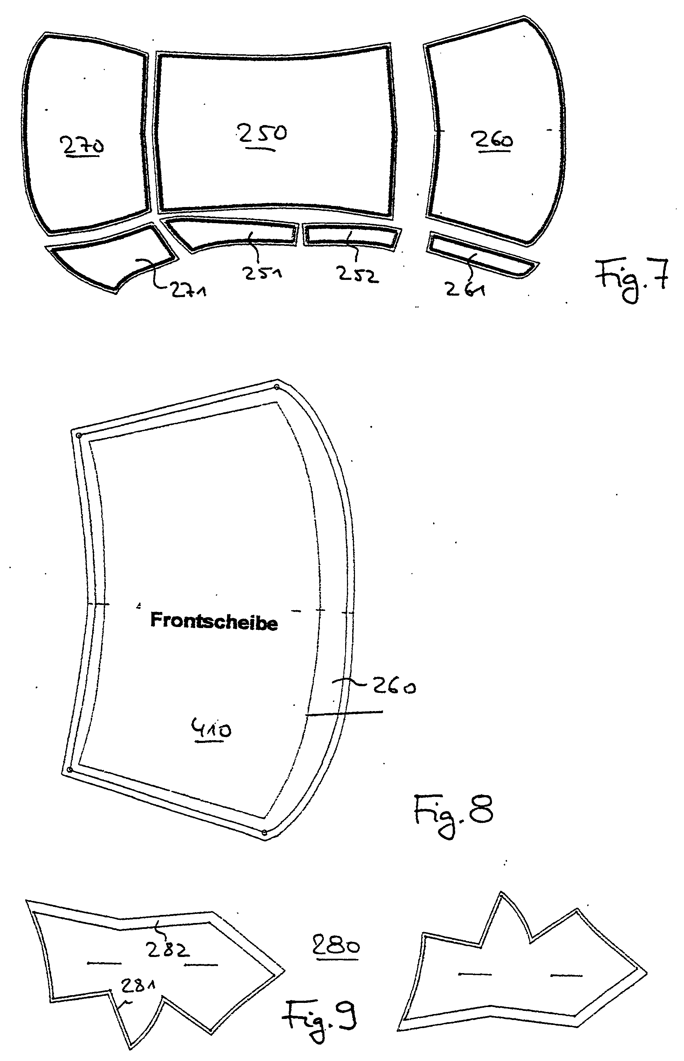

In Figur 8 ist ein Sichtsegment 410 gezeigt, dass in das Frontscheibensegment 260 eingenäht ist. Vorteilhafterweise wird das Sichtsegment 410 aus durchsichtigem Material auf das Frontscheibensegment 260 aufgenäht und die darunterliegende Folie des Frontscheibensegments ausgeschnitten.

Die Außenspiegel, die unregelmäßig aus der Karosserieoberfläche herausragen, erfordern zur Umhüllung besonders geformte Spiegelsegmente 280, die in Figur 9 beispielhaft dargestellt sind. Die Spiegelsegmente 280 werden entlang der Schnittkanten 281 mit sich selbst und entlang der Schnittkanten 282 mit den Seitensegmenten 230 (siehe Annählinie 237 in Figur 6) vernäht. Anwendungsabhängig kann vorgesehen sein, auch in den Spiegelsegmenten Sichtsegmente zu integrieren, damit die Spiegel auch im verpackten Zustand des Fahrzeugs verwendet werden können.

Die oben erläuterte Zusammensetzung der erfindungsgemäßen Schutzumhüllung aus einer Vielzahl von Foliensegmenten stellt lediglich ein Beispiel dar. Anwendungsabhängig können weitere Segmentierungen zur weiteren Anpassung an die Bauform des zu verpackenden Bauteils oder auch weniger Segmentierungen bei einfach strukturierten Bauteilen vorgesehen sein.

Die einzelnen Segmente sind vorzugsweise miteinander vernäht, es kann aber auch eine Verschweißung oder gleichwertige linienhafte oder abschnitts- oder punktweise Verbindung entlang der aneinandergrenzenden Ränder vorgesehen sein. Die Nähte sind typischerweise gekappt oder doppelt gekappt ausgeführt, um die Schutzumhüllung spritzwasserdicht herzustellen.

Die einzelnen Abdecksegmente der erfindungsgemäßen Schutzumhüllung bestehen aus einer flexiblen Folie. Es wird vorzugsweise ein in Figur 10 illustriertes, mehrschichtiges Folienmaterial nach Art eines Laminats verwendet, das aus einer Trägerfolie 1, einer Haftvermittlerschicht 2 und einer Vliesbeschichtung 3 besteht. Es ist beispielsweise die Kombination aus einer Polyethylenfolie als Trägerfolie (Dicke ≈ 100 µm) und einem thermisch verfestigten Polypropylen-Vlies (Flächenmasse ≈ 70 g/m²) vorgesehen. Die Polyethylenfolie kann zur Verbesserung der Kältefestigkeit mit einem Anteil von 1 - 5% E/VA und/oder mit Mofizierungsadditiven, z.B. mit einem UV-Schutzmittel, versetzt sein. Die Haftvermittlerschicht 2 besteht aus einem Kunststoff, der bspw. aus gleichen Teilen Polyethylen und Polypropylen besteht. Die Trägerfolie, die Haftvermittlerschicht und das Vlies werden durch eine Extrusionskaschierung oder Thermokalandrierung miteinander verbunden. Dabei wird die Oberfläche der Polyethylenfolie so weit erwärmt, daß diese schmilzt und sich vollflächig mit der Haftvermittlerschicht und über diese mit dem Vlies verbindet.

Das mehrschichtige Folienmaterial wird so zu der Schutzumhüllung vernäht, daß sich das Vlies auf den Innenseiten des durch die Abdecksegmente gebildeten HohLraums befindet. Das Vlies besitzt eine Mehrfachfunktion. Erstens dient es der weichen und schonenden Auflage der Folie auf der Oberfläche der abzudeckenden Karosserie und der Abdämpfung äußerer Kräfte. Des weiteren besitzt das Vlies eine Wasseraufnahmefähigkeit, die etwa dem Faktor 6 entspricht. Damit kann auch Umgebungsfeuchtigkeit oder Kondenswasser vom verpackten Fahrzeug aufgenommen werden.

Die in den Figuren gezeigte Schutzumhüllung kann dahingehend modifiziert sein, daß an bestimmten freien Rändern weitere Befestigungselemente, z. B. in Form von Spangen oder Clipsen, angebracht sind, mit denen die Teilsegmente zusätzlich gesichert werden. Es können ferner an der Umhüllung Befestigungselemente in Form von elastischen Bändern (z. B. angenähten Gummibändern), Laschen und/oder Taschen vorgesehen sein, die mit Teilen des verpackten Bauteils zusammenwirken.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Schutzumhüllung (10) für ein Kraftfahrzeug, mit einer Vielzahl von Foliensegmenten, die an ihren Rändern entlang vorbestimmter Kantenlängen miteinander verbunden sind, wobei die jeweils verbundenen Ränder verschieden geformte Begrenzungen der zugehörigen Foliensegmente bilden, **dadurch gekennzeichnet, dass** die Foliensegmente Abdecksegmente (200) umfassen, die jeweils zur Abdeckung von Karosserieteilen des Kraftfahrzeugs angepasst sind, und die Schutzumhüllung entsprechend einer Fläche im Raum gebildet ist, deren Form der Karosserieoberfläche des Kraftfahrzeugs entspricht.

2. Schutzumhüllung gemäß Anspruch 1, bei der die Abdecksegmente (200) vordere Kotflügelsegmente (210), ein Frontsegment (220), Seitensegmente (230), hintere Kotflügelsegmente (240), ein Dachsegment (250), ein Frontscheibensegment (260) und ein Rückfenstersegment (270) umfassen.

3. Schutzumhüllung gemäß Anspruch 1 oder 2, bei der die Foliensegmente Klappsegmente (300) aufweisen, die mit benachbarten Foliensegmenten entlang mindestens einer Schnittkante fest und entlang mindestens einer anderen Schnittkante reversibel lösbar verbunden sind.

4. Schutzumhüllung gemäß Anspruch 3, bei der die Klappsegmente (300) ein Fahrertürsegment (320) und/oder ein Motorhaubensegment (310) umfassen.

5. Schutzumhüllung gemäß Anspruch 3 oder 4, bei der an den lösbaren Schnittkanten reversible Verschlüsse, inbesondere Reißverschlüsse (510), Klettverschlüsse (540) oder Druckknopfleisten, vorgesehen sind.

6. Schutzumhüllung gemäß einem der vorhergehenden Ansprüche, bei der die Foliensegmente Sichtsegmente (400) aufweisen, die durchsichtig sind.

7. Schutzumhüllung gemäß Anspruch 6, bei der die Sichtsegmente (400) ein Frontscheibensegment (410) und/oder ein Seitenfenstersegment (420) umfassen.

8. Schutzumhüllung gemäß Anspruch 6 oder 7, bei der die Sichtsegmente aus einem transparenten Kunststoff oder einer mit Löchern versehenen Folie bestehen.

9. Schutzumhüllung gemäß einem der vorhergehenden Ansprüche, bei der Verstärkungssegmente zur Führung von Gummizügen (530) vorgesehen sind, mit denen die Schutzumhüllung an der Karosserie fixiert wird.

10. Schutzumhüllung gemäß einem der vorhergehenden Ansprüche, bei der Befestigungslaschen (520) zur Fixierung der Kotflügelsegmente (210, 240) an den Radkästen eines Kraftfahrzeugs vorgesehen sind.

11. Schutzumhüllung gemäß einem der vorhergehenden Ansprüche, bei der die Foliensegmente aus einem mehrschichtigen Laminat-material (1-3) bestehen, auf dessen Innenseite eine Vliesschicht (3) vorgesehen ist.

## Claims

1. Protective covering (10) for a motor vehicle, having a large number of foil segments which are connected to one another at their edges along predetermined edge lengths, the respectively connected edges forming variously shaped boundaries of the relevant foil segments, **characterised in that** the foil segments include cover segments (200) which are in each case adapted to cover parts of the bodywork of the motor vehicle, and the protective covering is formed according to an area in space, the shape of which corresponds to the bodywork surface of the motor vehicle.

2. Protective covering according to claim 1, in which the cover segments (200) include front mudguard segments (210), a front segment (220), side segments (230), rear mudguard segments (240), a roof segment (250), a front windscreen segment (260) and a rear window segment (270).

3. Protective covering according to claim 1 or 2, in which the foil segments have folding segments (300) which are connected to adjacent foil segments securely along at least one cut edge and in a reversibly detachable manner along at least one other cut edge.

4. Protective covering according to claim 3, in which the folding segments (300) include a driver's dcor segment (320) and/or an engine bonnet segment (310).

5. Protective covering according to claim 3 or 4, in which fasteners are provided on the detachable cut edges, especially zips (510), Velcro fastenings (540) or snap-fastening tabs.

6. Protective covering according to one of the preceding claims, in which the foil segments have see-through segments (400) which are transparent.

7. Protective covering according to claim 6, in which the see-through segments (400) include a front windscreen segment (410) and/or a side window segment (420).

8. Protective covering according to claim 6 or 7, in which the see-through segments are formed from a transparent plastics material or a foil provided with holes.

9. Protective covering according to one of the preceding claims, in which reinforcing segments are provided for guiding rubber bands (530) with which the protective covering is fixed on the bodywork.

10. Protective covering according to one of the preceding claims, in which fastening tabs (520) are provided to fix the mudguard segments (210, 240) to the wheel cases of a motor vehicle.

11. Protective covering according to one of the preceding claims, in which the foil segments consist of a multilayer laminate material (1-3) on the inner side of which a fleece layer (3) is provided.

## Revendications

1. Enveloppe de protection (10) pour un véhicule automobile avec une multitude de segments à feuilles reliés ensembles par leurs bords le long de longueurs prédéfinies d'arêtes, où les bords respectivement reliés forment des délimitations formées de différentes manières des segments à feuilles qui en font partie, **caractérisée en ce que** les segments à feuilles comprennent des segments de recouvrement (200) respectivement adaptés pour le recouvrement de parties de la carrosserie du véhicule automobile, et **en ce que** l'enveloppe de protection est formée selon une surface dans l'espace dont la forme correspond à la superficie de la carrosserie du véhicule automobile.

2. Enveloppe de protection selon la revendication 1, pour laquelle les segments de recouvrement (200) comprennent des segments de l'aile avant (210), un segment frontal (220), des segments latéraux (230), des segments d'aile arrière (240), un segment de toit (250), un segment de pare-brise (260) et un segment de vitre arrière (270).

3. Enveloppe de protection selon l'une quelconque des revendications 1 ou 2, pour laquelle les segments à feuilles présentent des segments rabattables (300) lesquels sont reliés de manière fixe avec des segments à feuilles adjacents le long d'au moins une arête de coupe, et de manière réversible et détachable le long d'au moins une autre arête de coupe.

4. Enveloppe de protection selon la revendication 3, pour laquelle les segments rabattables (300) comportent un segment de portière de conducteur (320) et/ou un segment de capot (310).

5. Enveloppe de protection selon l'une quelconque des revendications 3 ou 4, pour laquelle des fermetures réversibles, en particulier des fermetures éclair (510), des fermetures auto agrippantes (540) ou des lisières à boutons de pression sont prévus sur les arêtes de coupe détachables.

6. Enveloppe de protection selon l'une quelconque des revendications précédentes, pour laquelle les segments à feuilles présentent des segments à visibilité (400), lesquels sont transparents.

7. Enveloppe de protection selon la revendication 6, pour laquelle les segments à visibilité (400) comportent un segment de pare-brise (410) et/ou un segment de vitre latérale (420).

8. Enveloppe de protection selon l'une quelconque des revendications 6 ou 7, pour laquelle les segments à visibilité se composent d'une matière synthétique transparente ou d'une feuille pourvue de trous.

9. Enveloppe de protection selon l'une quelconque des revendications précédentes, pour laquelle des segments de renforcement sont prévus pour le guidage de rubans élastiques (530) à l'aide desquels l'enveloppe de protection est fixée sur la carrosserie.

10. Enveloppe de protection selon l'une quelconque des revendications précédentes, pour laquelle des languettes de fixation (520) pour la fixation des segments d'aile (210, 240) sont prévus sur les arches de roue d'un véhicule automobile.

11. Enveloppe de protection selon l'une quelconque des revendications précédentes, pour laquelle les segments à feuilles se composent d'un matériau en aggloméré laminé multicouches (1, 3), une couche de non-tissé (3) étant prévue sur leur face interne.
